# EUROPÄISCHE PATENTSCHRIFT

(11) **EP 2 189 506 B1**
(45) Veröffentlichungstag und Bekanntmachung des Hinweises auf die Patenterteilung: **18.01.2012**
(21) Anmeldenummer: 09175092.7
(22) Anmeldetag: 05.11.2009
(51) Int. Cl.: C09J 7/02, B31B 1/00

(54) **Karton ausgerüstet mit einem Streifen eines Klebebands zur Verstärkung insbesondere im Bereich von Stanzungen und gleichzeitig als Aufreißstreifen**
Cartons with a strip of adhesive tape for reinforcing, in particular in the area of punches as well as tear strips
Cartons equipés avec un fil d'une bande adhésive pour renforcer, notamment dans le domaine des estampages et simultanément en tant que bandes d'arrachement

(30) Priorität: 21.11.2008 DE 102008058537
(43) Veröffentlichungstag der Anmeldung: 26.05.2010
(73) Patentinhaber: tesa SE, 20253 Hamburg (DE)
(72) Erfinder: Rodewald, Ilse, Charlotte, NC 28210 (US)

(56) Entgegenhaltungen:
- EP-B1- 0 269 967
- WO-A1-2009/092641
- DE-A1- 4 402 444
- DE-A1-102006 062 249

## Beschreibung

Die Erfindung betrifft einen Karton ausgerüstet mit einem Streifen eines Klebebands zur Verstärkung von Kartonagen insbesondere im Bereich von Stanzungen und gleichzeitig als Aufreißstreifen für diese Kartonagen.

In der Wellpapp- und Vollkarton-Industrie besteht ein großer Markt für Verstärkungsklebebänder auf Haft- und Schmelzkleberbasis.
Wellpappe und Vollkarton neigen aufgrund ihrer auf Papier basierenden Eigenschaften zum Einreißen an Kanten, die einer erhöhten Belastung ausgesetzt sind. Kanten sind in diesem Fall zum Beispiel die Ecken an Verschlusslaschen bei Wellpappboxen oder die Kanten, die durch Ausstanzen von Löchem für Tragegriffe entstehen.
Besondere Belastungen sind zum Beispiel das wiederholte Öffnen und Verschließen von Faltschachteln oder aber das Tragen einer Wellpappbox mit Hilfe von Handeingriffausstanzungen. Gewöhnlich gibt bei höherer Belastung die Voll- oder Wellpappe nach und reißt ein. Im ersten Fall wird ein unansehnliches Äußeres der Verpackung produziert, und im zweiten Fall wird sogar die wichtige Zusatzfunktion des Tragegriffes zerstört.
Ein drittes Beispiel für die Anwendung von Verstärkungsbändem ist die Verstärkung gegen Ausbeulen bei großen Verpackungen wie Wellpack-Oktatainem (achteckige Schüttgutbehälter) zur Verpackung, Verschiffung und Aufbewahrung von zum Beispiel Granulaten. Verstärkungsbänder, die regelmäßig wie Ringe um die Verpackung gelegt werden, bringen punktuelle Verstärkungen in die Verpackung, die das Ausbeulen durch die Last des Inhaltes vermindern beziehungsweise verhindern.

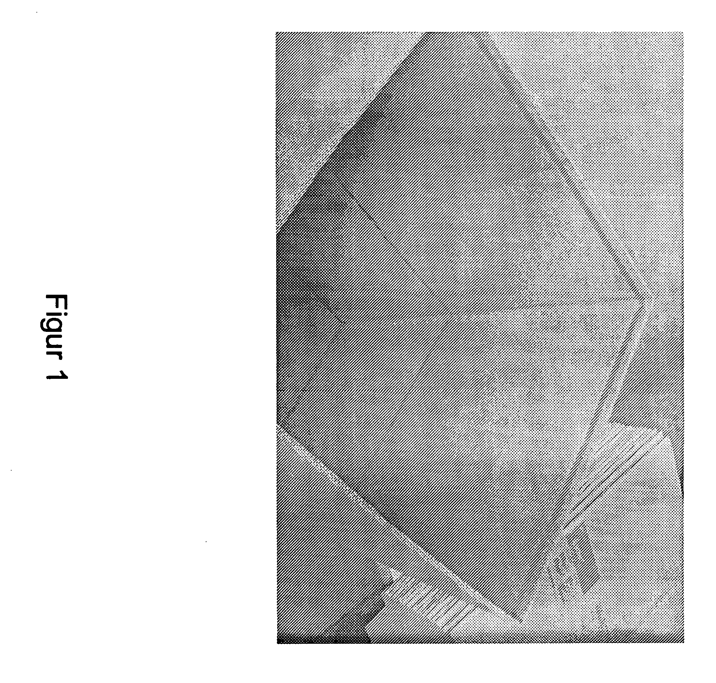

In der Figur 1 ist eine Wellpappbox gezeigt, die gegen das Ausbeulen mit mehreren Verstärkungsklebebändern in unterschiedlichen Höhen ausgerüstet ist.

In kleinerem Maßstab kann sich diese Eigenschaft auch zunutze gemacht werden, indem Boxen, die während der Versendung und Lagerung gestapelt werden müssen, durch das Verstärken mit einem Klebeband in der gerade beschriebenen Art und Weise zur Erhöhung des Schachtelstauchwiderstandes beitragen. Dies ermöglicht entweder das Vergrößern der Stapelhöhe oder aber birgt die Möglichkeit, die Papiergrammatur der Boxen herabzusetzen und damit das eingesetzten Rohmaterial zu verringern.

Ein weiterer großer Markt im Bereich der Voll- und Wellpappindustrie ist der Einsatz von Aufreißstreifen. Dies sind schmale Bänder, sowohl erhältlich mit Haft- oder Schmelzkleber, die es durch Aufbringung auf die Innenseite einer Voll- oder Wellpappverpackung ermöglichen, dieselbige durch Herausreißen des Streifen ohne zusätzliche mechanische Hilfsmittel zu öffnen. Dies bringt vor allen Dingen erhöhte Sicherheit beim Öffnen der Verpackung für deren Inhalt, da dieser durch den Einsatz von Messern oder Scheren beschädigt werden kann. In einer Variante kann in der Box eine umlaufende Perforation realisiert sein, die aber den Nachteil birgt, dass der Stapelstauchwiderstand der Box reduziert wird.

Aufreißstreifen sind bekannt und dienen in verschiedenen Formen als Öffnungshilfe einerseits für Zigarettenpackungen, Süßwarenverpackungen und ähnlichen Verpackungen, die mit einer Folie eingeschlagen sind, andererseits für Kartonagen wie etwa Waschmittelverpackungen. Dabei wird der Aufreißstreifen an der Verpackung so befestigt, dass man zum Öffnen an dem Aufreißstreifen zieht und damit die Einschlagfolie beziehungsweise den Karton an der gewünschten Stelle zerstört.

Traditionell sind Aufreißstreifen im Einsatz, die einseitig mit einer Klebemasse auf Hotmeltbasis ausgerüstet sind. Beispielsweise werden diese in der US 3,187,982 A, der US 3,311,032 A oder der CA 749 198 A beschrieben.
Weiterhin wird ein Aufreißstreifen verwendet, der selbstklebend ausgerüstet ist. Dazu bedient man sich einer monoaxial gereckten Trägerfolie, die mit einer selbstklebenden Schicht auf der einen Seite und einer Silikonreleaseschicht auf der anderen Seite ausgestattet ist. Optional ist unter einer der beiden Schichten ein Druck. Solche oder ähnliche Aufbauten sind für die Herstellung von Haftklebebändern bekannt, beispielsweise aus der DE 21 04 817 A, der US 3,088,848 A, der US 3,482,683 A oder der US 2,956,904 A. Nicht offenbart wird in diesen Schriften die Verwendung solcher Folienaufbauten für selbstklebende Aufreißstreifen. Die Verwendung von derartigen selbstklebenden Bändern als Aufreißstreifen wird aber in der Zeitschrift "Packaging Review" vom Februar 1973, Seite 57 erwähnt.

Eine spezielle Ausführungsform dieser selbstklebend ausgerüsteten Aufreißstreifen beschreibt die DE 43 38 524 A1. In dieser wird ein selbstklebender Aufreißstreifen offenbart, bestehend aus einer Trägerfolie, einer Releaseschicht, einer der Releaseschicht abgewandten Kleberschicht und gegebenenfalls einem Druck unter der Kleber- oder Releaseschicht. Der Streifen ist dadurch gekennzeichnet, dass die Trägerfolie aus einer verstreckten Folie besteht, dass die Release- und Kleberschicht aus wässriger Lösung, Emulsion oder Dispersion aufgetragen werden und dass Releaseschicht, Druckfarbe und Kleberschicht auf einer gegenüber dem Aufreißstreifen um ein vielfaches breitere Folie in einem Arbeitsgang auf einer Maschine aufgetragen werden.

Üblich für den Einsatz als Öffnungshilfe von Folienverpackungen sind mindestens monoaxial, bevorzugt biaxial verstreckte mindestens einschichtige 15 bis 60 µm dicke Trägerfolien.
Selbstklebende oder wärmeaktivierbare Aufreißstreifen aus in Längsrichtung verstreckter Polypropylen-Folie werden für das Aufreißen von Kartonagen seit langem eingesetzt. Sie werden angeboten in Folienstärken von 50 bis 140 µm. Foliendicken größer 85 µm finden Verwendung beim Öffnen besonders schwerer Kartonagen. Üblicher sind Aufreißstreifen in Dicken zwischen 60 und 90 µm.
Aufreißstreifen, die auf einem monoaxial gerecktem Polypropylenträger basieren, verwenden häufig für den Träger eine spezielle, in ihrer Aufreißleistung optimierten Polymerabmischung, die in Zugfestigkeiten in Längsrichtung von 230 bis 330 N/mm² resultiert.
Diese Polypropylen-Aufreißstreifen in vorzugsweise 60 bis 65 µm zeigen ein einwandfreies Aufreißverhalten bei sämtlichen Wellpapp-Kartonagen einschließlich der Mikrowellpappe. Dies gilt unabhängig davon, ob genau in Richtung des aufgeklebten Streifens aufgerissen wird.
"Genau in Richtung des aufgeklebten Streifens" bedeutet, dass der Aufreißstreifen beim Aufreißvorgang so geführt wird, dass die Zugrichtung nie von der Richtung abweicht, die der auf der Kartonrückseite verklebte Aufreißstreifen vorgibt und die während des Aufreißvorganges als Aufreißfuge auch von der Kartonvorderseite aus sichtbar wird. Nur dann ist die Kräfteverteilung im Aufreißstreifen bei dem Aufreißvorgang symmetrisch und die Belastung beider Schnittkanten gleichmäßig. In der Praxis wird diese ideale Aufreißrichtung meist nicht eingehalten. Man hat mit Abweichungen von dieser Richtung bis zu etwa 30° zu rechnen.

Ein Trend im Aufreißstreifenmarkt ist das Abweichen von der auf die Aufreißleistung optimierten Folienrezeptur. Eine verminderte Aufreißleistung wird hierbei billigend in Kauf genommen, um im Gegenzug eine verbesserte Maschinengängigkeit des Aufreißstreifens während seiner Applikation zu erzielen.
Beispielsweise kann eine Reduzierung der Schlagzähzusätze unter die für eine optimale Aufreißleistung empfehlenswerte Menge bis hin ihrem völligen Weglassen vorgenommen werden.

Schwere Vollpapp-Qualitäten mit etwa 1000 g/m² lassen sich nur noch in der optimalen Aufreißrichtung störungsfrei aufreißen. Bei Abweichen von dieser Richtung können infolge der unsymmetrischen Belastung des Streifens von der stärker belasteten Kante des Streifens ausgehende Abrisse beim Aufreißvorgang auftreten. Die Häufigkeit der Abrisse wird zum Beispiel von Inhomogenitäten in der Folie, von Mikroscharten in den Schnittkanten der Folienstreifen, von Holzteilchen oder besonders verfestigten Partikeln in der Pappe und ähnlichen Erscheinungen beeinflusst. Außerdem besitzt die Aufreißgeschwindigkeit einen Einfluss.

Für die Verpackung von Waschmitteln werden in stärkerem Masse Vollpappen zwischen 450 und 600 g/m² Flächengewicht eingesetzt, die unter Umständen eine wachsimprägnierte Zwischenschicht aufweisen, auf jeden Fall aber mit einer auflaminierten Deckschicht aus hochglänzendem gussgestrichenem Chromolux-Papieren versehen sind. Diese Pappen lassen sich mit den Polypropylen-Aufreißstreifen nur mit einem ähnlich schlechten Ergebnis aufreißen wie die oben genannten 1000 g/m²-Vollpappen.

Aus der EP 0 269 967 A1 ist ein Aufreißstreifen mit einem in überwiegend einer Richtung gerecktem Träger bekannt, der mit einer Klebeschicht versehen ist, wobei der Träger aus mindestens einer Basisschicht besteht, die mit mindestens einer zähen Schicht versehen ist, die zäher ist als die Basisschicht.
Besonders bevorzugt wird ein Aufreißstreifen mit einem in überwiegend einer Richtung gereckten Träger, der mit einer Klebeschicht versehen ist, wobei der Träger aus mindestens einer ein Polypropylen-Olefin-Copolymerisat und/oder ein Polypropylen-Schlagzähzusatz-Gemisch enthaltenden Basisschicht besteht, die mit mindestens einer polypropylenhaltigen zähen Schicht versehen ist, die einen Schlagzähzusatz enthält und zäher ist als die Basisschicht ist.

Bei der Beschreibung von einseitig klebend ausgerüsteten Aufreißstreifen ist gemäß Stand der Technik auf der der Klebmasse abgewandten Seite ein Release aufgetragen, als Beispiel sei die schon erwähnte DE 43 38 524 A1 zu nennen.

Bei Aufreißstreifen auf Polypropylen-Basis kommt bevorzugt TPP (entspricht monoaxial gestrecktem Polypropylen (MOPP) zur Verwendung, da auch unter hoher Zugbelastung nur eine geringe Dehnung auftreten darf.
Hohe Zugbelastungen treten einmal bei der Endanwendung auf, wenn der Aufreißstreifen beim Öffnen der Verpackung durch die Pappe oder den Karton beziehungsweise die Folie gezogen wird und diese sicher zertrennen soll. Sie treten des Weiteren auch bei der Applikation des Aufreißstreifens auf die Verpackung auf, da dieser häufig mit Geschwindigkeiten von mehr als 150 m/min aufgebracht wird. Insbesondere beim Start, das heißt dem Auflegen des Aufreißstreifens auf zum Beispiel die Pappe, wird die bis zu ca. 15 kg schwere Spule, zu welcher der Aufreißstreifen handelsüblich konfektioniert ist, plötzlich und ruckartig beschleunigt. Selbst im Dauerbetrieb wirken auf den Aufreißstreifen oftmals Zugbeanspruchungen von mehr als 8 N. Dies schließt den Einsatz von ungerecktem oder auch biaxial gerecktem Polypropylen aus.

Wenn TPP ohne Release verwendet wird, tritt beim Abrollen, also beim Trennen von Masse und Träger, ein Spleißen des Trägers auf, sprich ein Teil der in Längsrichtung ausgerichteten und gereckten Fasern wird aus der Trägeroberfläche herausgerissen. Dies kann den Prozess der Konfektionierung beeinträchtigen, wenn die beschichtete und gegenüber dem Aufreißstreifen viel breitere Folienbahn in einzelne Aufreißstreifen geschnitten und hierfür vom Ballen abgerollt wird. Die aus der Trägeroberfläche stehenden Fasern selbst behindern den Prozess, oder es kann auch zu Abrissen der gesamten Trägerbahn kommen. Weiterhin können ähnliche Probleme beim Abrollen des Aufreißstreifens während der Applikation auf die Verpackung auftreten.

Verstärkungsklebebänder und Aufreißstreifen befinden sich häufig in ähnlichen Bereichen der Verpackung, was bedeutet, dass die beiden Bänder sehr nah beieinander aufgebracht werden müssen. Dies ist technisch oft nur in zwei voneinander getrennten Schritten möglich, welches wiederum die Produktionskosten erhöht. Oft wird daher auf eine der beiden Möglichkeiten verzichtet, um die Komplexität der Verpackung so gering wie möglich zu halten.

Im Markt erhältlich ist eine Kombination aus beidem in Form eines Verstärkungsstreifens, der auf einem Schmelzkleber basiert. Der Verstärkungsstreifen besteht aus einem in eine Schmelzklebermatrix eingebetteten, nicht verzwirnt oder vertengelten Bündel aus Polyesterfasern, die in Maschinenrichtung ausgerichtet sind. Dieser wird auf die Innenseite der Wellpappe durch Aufschmelzen der Matrix verklebt und dient dort als zunächst als Verstärkungsstreifen. Durch eine Anstanzung in der Mitte des Streifens (in der Mitte auf die Breite gesehen) im Weiterverarbeitungsprozess wird es möglich gemacht, einen Teil dieses Faserbündels aus dem Verbund herauszureißen und als Aufreißstreifen zu verwenden. Die schmelzkleberbasierten Verstärkungsstreifen mit den inkorporierten Fasern haben jedoch einige Nachteile im Verarbeitungsprozess der Vollund Wellpappe. Im Wesentlichen beruhen diese Nachteile auf der Dicke der Bänder. Die Dicke dieser Bänder entspricht häufig 200 bis 350 µm. Dies führt zum einen zu Problemen beim Stapeln der Wellpappbögen und der gefalteten Boxen. Da der Streifen immer an der selben Stelle auf einen Bogen aufgebracht ist, führt das im Stapel zum Aufbau an Dicke an diesem Punkt. Dadurch wird der Stapel schief, und die Bögen fangen ab einem bestimmten Neigungsgrad an zu rutschen. Dementsprechend muss tiefer gestapelt werden als beim Stapeln ohne Verstärkungsstreifen. Dies erhöht die Anzahl der erforderlichen Paletten und damit die Komplexität in der Produktion.
Des Weiteren kann es beim Bedrucken solcher Bögen zu Problemen kommen, weil durch die unterschiedlichen Dicken des Drucksubstrats im Druckprozess unterschiedliche Druckverhältnisse entstehen, was in einem ungleichmäßigen Druckbild resultieren kann. Demnach ist es also für den Verarbeiter von Wellpackbögen mit Verstärkungsstreifen von Interesse, vor allen Dingen dünne Klebebänder zu nutzen, um solche Probleme nicht entstehen zu lassen.

Demnach birgt die Verbindung von einem folienbasierten Verstärkungsstreifen mit einem ebenfalls folienbasierten Aufreißstreifen großes Potenzial, da diese mit einem Haftkleber ausgerüsteten Verstärkungsstreifen im Regelfall eine Gesamtdicke von 60 bis 200 µm aufweisen und damit nicht die oben genannten Probleme verursachen und trotzdem eine geeignete Verstärkungswirkung aufweisen.

Bisher jedoch konnte ein solche Kombination nicht realisiert werden, da die bisher verwendeten Materialien wie MOPP (monoaxial orientiertes Polypropylen) keiner bekannten und kommerziell sinnvollen Weiterverarbeitung unterzogen werden konnten.

Generell neigen MOPP-Folien, wie sie als Träger in Strapping-Klebebändern und auch in Klebebändern für Reinforcement-Anwendungen benutzt werden, leicht in Längsrichtung weiter zu reißen. Dieses Reißen ist jedoch nicht über eine längere Strecke zuverlässig zu gewährleisten. Würde man ein verklebtes Klebeband mit einem Träger aus einer MOPP-Folie in der oben genannten Art und Weise anstanzen, so wäre es zwar möglich, ein schmalen Streifen der Klebebandenden herauszulösen und ihn als Aufreißstreifen zu verwenden.

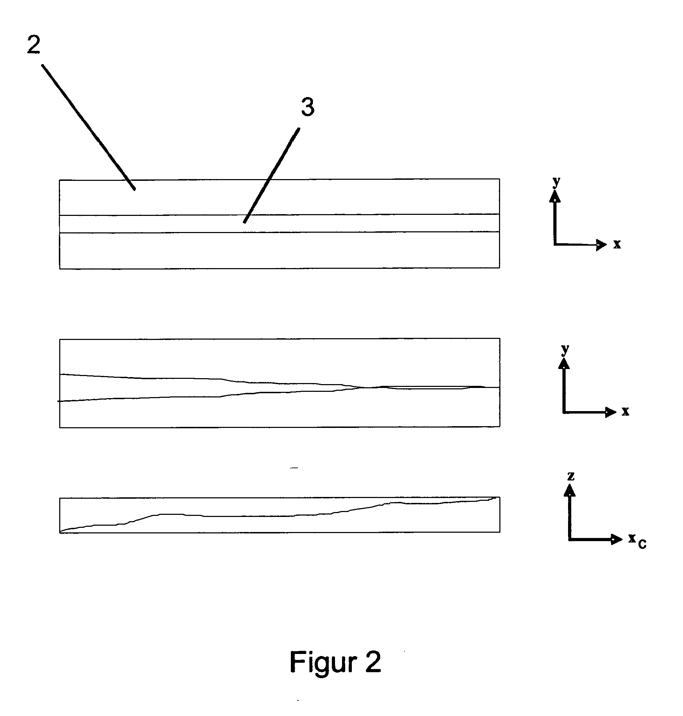

Figur 2 zeigt einen Verstärkungsstreifen 2, wie er auf einer Wellpappe einer Verpackung verklebt werden könnte. Ein Teil des Verstärkungsstreifens dient, wenn die Verpackung geöffnet werden soll, als Aufreißstreifen 3, der über eine (nicht gezeigte) Anstanzung innerhalb des Verstärkungsstreifens 2 gebildet wird.
Gezeigt ist in der Figur 2 oben das Aussehen des optimalen Aufreißstreifens, in der Mitte und unten das Aussehen eines Aufreißstreifens, der nicht geeignet ist.
Beim optimalen Aufreißstreifen (wie er erfindungsgemäß beschrieben wird) durchtrennt dieser den Verstärkungsstreifen sowie die darüber befindliche Pappe in einer sauberen Linie. Insbesondere bleibt die Breite des Aufreißstreifens über die gesamte Länge konstant.
Anders sieht dies bei einem Aufreißstreifen aus, der nicht geeignet ist, beispielsweise einem solchen aus einer MOPP-Folie. Aufgrund des geringen Weiterreißwiderstand in Querrichtung der MOPP-Folie verjüngt sich dieser Streifen während des Aufreißvorgangs unvorteilhaft bis hin zum vollständigen Abriss (siehe Figur 2 Mitte). Dies resultiert daraus, dass während der Verwendung eines Aufreißstreifens dieser häufig nicht exakt parallel zu seiner Verklebungsrichtung (x) durch den Karton gezogen wird, sondern eher in einem variierenden Winkel davon abweichend. Dies verursacht Kräfte, die nicht nur parallel in Verstreckungsrichtung wirken, sondern auch davon abweichend in y-Richtung.
Selbst wenn exakt parallel zur Verklebungsrichtung am Aufreißstreifen gezogen würde, wirken wahrend des Herauslösens eines solchen Streifens aus einem Folientape noch Kräfte in z-Richtung. Diese führen ebenso dazu, dass der Aufreißstreifen abreißt (siehe Figur 2 unten).
Der Streifen verjüngt sich sowohl bezüglich der Breite (Figur 2 Mitte) als auch bezüglich der Dicke (Figur 2 unten).

Der Erfindung liegt die Aufgabe zugrunde, ein Karton ausgerüstet zumindest mit einem Streifen eines Klebebands zur Verfügung zu stellen, das zwei Funktionen in sich vereinigt, das nämlich zum einen als verstärkender Streifen von Kartonagen insbesondere im Bereich von Stanzungen und zum anderen gleichzeitig als Aufreißstreifen für diese Kartonagen dienen kann.

Gelöst wird diese Aufgabe durch den Karton ausgerüstet zumindest mit einem Streifen eines Klebebands, wie es im Hauptanspruch niedergelegt ist. Gegenstand der Unteransprüche sind dabei vorteilhafte Weiterbildungen.

Demgemäß betrifft die Erfindung ein Karton ausgerüstet zumindest mit einem Streifen eines Klebebands zur Verstärkung von Kartonagen insbesondere im Bereich von Stanzungen und gleichzeitig als Aufreißstreifen für diese Kartonagen, wobei in dem Streifen zumindest eine Austanzung vorgesehen ist, die als Anfasser für den Streifen beim Aufreißendient und wobei als Trägermaterial für das Klebeband eine monoaxial in Längsrichtung des Streifens verstreckte Polyolefinfolie verwendet wird und wobei die Folie eine Mischung aus einem olefinischen und einem polaren nichtolefinischen Polymer enthält.

Der Anteil an polarem nichtolefinischem Polymer in der Mischung liegt vorzugsweise im Bereich von 5 bis 30 Gew.-%.

Zur Erzielung von hohen Zugfestigkeiten, von hohen Spannungen bei 10 %-Dehnung und von hohem Weiterreißwiderstand sollten die Reckprozessbedingungen so gewählt werden, dass das Reckverhältnis das für Folie jeweils maximal technisch durchführbare ist. Erfindungsgemäß liegt das Reckverhältnis in Längsrichtung vorzugsweise bei mindestens 1:4,5, weiter vorzugsweise bei mindestens 1:7.

Ein Reckverhältnis von zum Beispiel 1:6 gibt an, dass aus einem Abschnitt der Primärfolie von 1 m Länge ein Abschnitt von 6 m Länge der gereckten Folie entsteht. Oft wird das Reckverhältnis auch als Quotient der Liniengeschwindigkeit vor der Verstreckung und der Liniengeschwindigkeit nach der Verstreckung bezeichnet. Hier wird die erste Definition verwendet.

In einer bevorzugten Ausführung der Erfindung weist die Folie die folgenden Eigenschaften auf:
- in Längsrichtung eine Zugfestigkeit von mindestens 200 N/mm², vorzugsweise mindestens 300 N/mm², weiter vorzugsweise mindestens 400 N/mm²,
- in Längsrichtung eine Spannung bei 10 %-Dehnung von mindestens 150 N/mm², vorzugsweise mindestens 200 N/mm², weiter vorzugsweise mindestens 250 N/mm² und/oder
- in Querrichtung einen Weiterreißwiderstand von mindestens 400 N/mm, vorzugsweise mindestens 800 N/mm, weiter vorzugsweise mindestens 1500 N/mm. -

Zur Berechnung von Festigkeitswerten werden die breitenbezogenen Kraftwerte durch die Dicke geteilt. Im Fall einer Bestimmung der Festigkeitswerte am Klebeband wird als Dicke nicht die Gesamtdicke des Klebebands, sondern nur die der Trägerfolie zugrunde gelegt.

Die Dicke der Trägerfolie liegt vorzugsweise zwischen 15 und 200 µm, besonders bevorzugt zwischen 30 und 140 µm, ganz besonders bevorzugt zwischen 50 und 90 µm.

Das olefinische Polymer ist ein Homo- oder Copolymer von Olefinen wie Ethylen, Propylen oder Butylen. Der Begriff Copolymer in hier sinngemäß dahingehend zu verstehen, dass er Terpolymere mit einschließt.
Das olefinische Polymer enthält vorzugsweise mindestens 50 Gew.-% Propylen.

Besonders geeignete Folienrohstoffe sind kommerziell erhältliche Polypropylenhomopolymere oder Polypropylencopolymere einschließlich der Block- (Impact-) und Randompolymere.

Die Schmelzindizes der genannten Polymere müssen im für Flachfolienextrusion geeigneten Bereich liegen. Dieser Bereich sollte zwischen 0,3 und 15 g/10 min, vorzugsweise im Bereich von 0,8 bis 5 g/10 min (gemessen bei 230 °C/2,16 kg) liegen. Das Polypropylen ist vorzugsweise überwiegend isotaktisch aufgebaut. Der Biegemodul sollte mindestens 1000 MPa, vorzugsweise mindestens 1500 MPa, ganz besonders vorzugsweise mindestens 2000 MPa betragen.

Unter einem polaren nichtolefinischen Polymer werden alle Polymere verstanden, welche
a) kein Olefin wie zum Beispiel Ethylen, Propylen oder Butylen als Monomer enthalten und
b) als polare Komponente Heteroatome wie Schwefel, Stickstoff, Phosphor und vorzugsweise Sauerstoff enthalten.
Das polare nichtolefinische Polymer wird vorzugsweise aus der Gruppe der Polyester, Polyamide, Polyurethane, Polyoxymethylen, Polyarylensulfide und Polyarylenoxide ausgewählt. Besonders bevorzugt sind teilkristalline Polymere. Gemäß einer besonders vorteilhaft gestalteten Ausführungsform der Erfindung werden als polares nichtolefinisches Polymer Polybutylenterephthalat und/oder Polyoxymethylen gewählt.

In der bevorzugten Ausführungsform besteht die Matrix aus dem olefinischen Polymer, worin das polare nichtolefinische Polymer in Form von Fasern eingebettet ist.
Die Fasern weisen vorzugsweise einen Durchmesser von 0,01 bis 50 µm, besonders bevorzugt 0,1 bis 20 µm auf.

Die Dimensionen der Fasern und damit die mechanischen Eigenschaften der Folie können durch den Herstellprozess und die Zugabe eines polar modifizierten Polyolefins als dritte Komponente in der Mischung eingestellt werden.
Das polar modifizierte Polyolefin wird vorzugsweise aus der Gruppe der Copolymere von Olefinen mit Vinylestern, Methacrylsäure und Acrylsäure, besonders bevorzugt Ethylen-Vinylacetat- und Ethylen-(Meth)acrylat-Copolymere sowie deren Ester oder aus der Gruppe der Pfropfpolymere mit einer ungesättigten organischen Säure, besonders bevorzugt ein maleinsäureanhydrid-, methacrylsäure oder acrylsäuregepropftes Polyolefin ausgewählt, wobei der Anteil an polar modifiziertem Polyolefin in der Mischung vorzugsweise im Bereich von 0,2 bis 10 Gew.-% liegt.

Die Polymere der Folie können in Reinform oder in Abmischung mit Additiven wie Antioxidantien, Lichtschutz-, Antiblock-, Gleit- und Verarbeitungshilfsmitteln, Füllstoffen, Farbstoffen, Pigmenten, Treib- oder Nucleierungsmitteln verwendet werden.

Die Folie kann zum Beispiel als Träger für ein Klebeband verwendet werde. Ein solches Klebeband ist zur Verstärkung von Kartonagen insbesondere im Bereich von Stanzungen, als Aufreißstreifen für Kartons und zum Bündeln von Gegenständen geeignet. Solche Gegenstände sind zum Beispiel Rohre, Profile oder gestapelte Kartons (Strapping-Anwendung). Da die erfindungsgemäße Folie selbst im Fall von verletzten Kanten in Querrichtung praktisch nicht durchreißbar ist, können Abrisse von Aufreißstreifen oder das Weiterreißen von verstärkten Kartonstanzungen vermieden werden. Derartige Folien neigen zum Verlauf eines Risses in Längsrichtung, welche im Fall einer Kantenbeschädigung oder Anstanzung das Abreißen in Querrichtung durch Umlenkung des Risses in Längsrichtung verhindert.

Der bevorzugte Prozess zur Herstellung der Folie beziehungsweise eines unter Verwendung der Folie hergestellten Klebebandes beinhaltet folgende Schritte:
- Polymere und gegebenenfalls Additive werden gemischt und in einem Extruder • einer Flachfoliendüse zugeführt.
- Der Schmelzefilm wird dann auf einer so genannten "Chillroll" kontrolliert abgekühlt.
- Bevor die Folienbahn dem Reckwerk zugeführt wird, wird sie über temperierte Walzen auf eine geeignete Recktemperatur aufgeheizt.
- Dann wird die Folie im Kurzspalt in Maschinenrichtung orientiert.
- Die Trägerfolie wird durch Beschichtung oder schon vorher durch Coextrusion mit einer Klebemasse versehen.

Die Folie kann ein- oder mehrschichtig sein, vorzugsweise ist sie mehrschichtig besonders bevorzugt vom Typ ABC, wobei B die erfindungsgemäße Mischung enthält und A und C ganz oder überwiegend aus polyolefinischem Polymer bestehen. Durch die Coextrusion können Ablagerung beim Verstrecken der Folie und Probleme beim Beschichten mit Release, Primer oder Klebemasse vermieden werden.

Die Folie kann durch Kaschierung, Prägung oder Strahlenbehandlung modifiziert sein.

Die Folie kann mit Oberflächenbehandlungen versehen sein. Dies sind zum Beispiel zur Haftvermittlung Corona-, Flamm-, Fluor- oder Plasmabehandlung oder Beschichtungen von Lösungen oder Dispersionen oder flüssige strahlenhärtbare Materialien. Weitere mögliche Beschichtungen sind Bedruckungen und Antihaftbeschichtungen, zum Beispiel solche aus vernetzten Silikonen, Acrylaten (zum Beispiel Primal® 205), Polymeren mit Vinylidenchlorid oder Vinylchlorid als Monomer oder Stearylverbindungen wie Polyvinylstearylcarbamat oder Chromstearatkomplexen (zum Beispiel Quilon® C) oder Umsetzungsprodukten aus Maleinsäureanhydridcopolymeren und Stearylamin.

Als Klebeband wird erfindungsgemäß eine Folie mit einer selbstklebenden oder einer hitzeaktivierbaren Klebstoffschicht bevorzugt. Vorzugsweise handelt es sich jedoch nicht um siegelfähige Klebstoffe, sondern um Haftkleber. Die Folie wird für die Klebebandanwendung ein- oder beidseitig mit Haftkleber als Lösung oder Dispersion oder 100 %ig (zum Beispiel aus der Schmelze) oder durch Coextrusion mit der Folie beschichtet. Die Klebeschicht(en) kann durch Wärme oder energiereiche Strahlen vernetzt und erforderlichenfalls mit Trennfolie oder Trennpapier abgedeckt werden. Insbesondere sind Haftkleber auf Basis Acrylat, Naturkautschuk, thermoplastischem Styrolblockcopolymer oder Silikon geeignet.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Zur Optimierung der Eigenschaften kann die zum Einsatz kommende Selbstklebemasse mit einem oder mehreren Additiven wie Klebrigmachem (Harzen), Weichmachern, Füllstoffen, Pigmenten, UV-Absorbem, Lichtschutz-, Alterungsschutz, Vemetzungsmitteln, Vernetzungspromotoren oder Elastomeren abgemischt sein.

Geeignete Elastomere zum Abmischen sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Klebrigmacher sind beispielsweise Kohlenwasserstoffharze (zum Beispiel aus ungesättigten C₅- oder C₇-Monomeren), Terpenphenolharze, Terpenharze aus Rohstoffen wie α- oder β-Pinen, aromatische Harze wie Cumaron-Inden-Harze oder Harze aus Styrol oder α-Methylstyrol wie Kolophonium und seine Folgeprodukte wie disproportionierte, dimerisierte oder veresterte Harze, wobei Glycole, Glycerin oder Pentaerythrit eingesetzt werden können. Besonders geeignet sind alterungsstabile Harze ohne olefinische Doppelbindung wie zum Beispiel hydrierte Harze.

Geeignete Füllstoffe und Pigmente sind beispielsweise Ruß, Titandioxid, Calciumcarbonat, Zinkcarbonat, Zinkoxid, Silicate oder Kieselsäure.

Geeignete UV-Absorber, Lichtschutz- und Alterungsschutzmittel für die Klebemassen sind solche, wie sie in dieser Schrift für die Stabilisierung der Folie aufgeführt werden.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure.

Eine bevorzugte Ausführungsform enthält einen Haftkleber aus Naturkautschuk, Kohlenwasserstoffharz und Antioxidant.

Die Beschichtungsstärke mit Klebemasse liegt vorzugsweise im Bereich von 18 bis 50, insbesondere 22 bis 29 g/m². Die Breite der Klebebandrollen liegt vorzugsweise im Bereich von 2 bis 60 mm.

### Prüfmethoden

Dicke: DIN 53370
Zugfestigkeit: DIN 53455-7-5 in Längsrichtung
Zugspannung 10 %-Dehnung: DIN 53455-7-5 in Längsrichtung
Bruchdehnung: DIN 53455-7-5 in Längsrichtung
Schlagzugzähigkeit in Querrichtung: DIN EN ISO 8256
   - (Einspannlänge 10 mm, 7,5 J Pendel, 5 Lagen, Joch 30 g)
Weiterreißwiderstand in Querrichtung: DIN 53363-2003-10
Schmelzindex für PP: DIN 53735 (230 °C, 2,16 kg)
Schmelzindex für PBT: DIN 53735 (250 °C, 2,16 kg)
Schmelzindex für POM/EVAL/PE-LLD: DIN 53735 (190 °C, 2,16 kg)
Schmelzindex für PS-HI: DIN 53735 (200 °C, 5 kg)
Biegemodul (Flexural Modulus): ASTM D 790 A
Klebtechnische Daten: AFERA 4001 (entsprechend DIN EN 1939)

### Beispiele

### Rohstoffe

Dow 7C06:
   PP-Blockcopolymer, MFI 1,5 g/10 min, nicht nucleiert, Biegemodul 1280 MPa (Dow Chemical)
Bormod HD 905 CF:
   PP-Homopolymer, MFI 6 g/10 min, Biegemodul 2150 MPa, enthält ein α-Nucleierungsmittel (Borealis)
Dowlex 2032:
   PE-LLD, MFI 2 g/10 min (Dow Chemical)
Styron 457:
   PS-HI, MFI 3 g/10 min, Biegemodul 2200 MPa (Dow Chemical)
EVAL G156B:
   EVAL Ethylengehalt 48 mol %, MFI 6,4 g/10min, Biegemodul 2800 MPa (EVAL Europe)
Licocene PP MA 7452 GR TP:
   PP-g-MA, mit Maleinsäureanhydrid gepfropftes Metallocenpolypropylenwachs (Clariant)
Hostaform C9021 natur:
   POM, MFI 8 g/10 min, Biegemodul 2800 MPa (Ticona)
Celanex 2002-2 natur:
   PBT, MFI 20, Biegemodul 2500 MPa (Ticona)

Im Folgenden werden anhand von Beispielen vorteilhafte Ausführungsformen des erfindungsgemäßen Klebebands beschrieben, ohne die Erfindung damit unnötig einschränken zu wollen.
Des Weiteren werden mittels dreier Vergleichsbeispielen nichtfunktionierende Klebebänder gezeigt, die für die gesuchte Verwendung nicht geeignet sind.

### Beispiel 1

Die Folie wird auf einer Einschneckenextrusionsanlage mit Flachdüse mit flexibler Düsenlippe in einer Schicht hergestellt, gefolgt von Chillrollstation und einer einstufigen Kurzspaltreckanlage.
Dow 7C06, Celanex 2002-2 natur und Licocene PP MA 7452 GR TP werden im Verhältnis 15:4:1 gemischt und extrudiert. Die Düsentemperatur beträgt 230 °C. Chillroll-Temperaturen and Reckwalzen-Temperaturen werden so eingestellt, dass die Kristallinität der Folie vor und nach dem Reckvorgang so hoch wie möglich wird. Das Reckverhältnis beträgt 1:5.

**Folieneigenschaften:**

| | |
|---|---|
| Trägerdicke nach Reckung/ µm | 80 |
| Spannung bei 1 %-Dehnung/ MPa | 23,6 |
| Spannung bei 10 %-Dehnung/ MPa | 154 |
| Zugfestigkeit/ MPa | 220 |
| Bruchdehnung/ % | 26 |
| Weiterreißwiderstand/ N/mm | 1220 |
| Schlagzugzähigkeit quer/ mJ/mm² | 63 |

Die Folie wird beidseitig coronavorbehandelt, auf der Oberseite mit einer 0,5 %igen Lösung von PVSC in Toluol als Release beschichtet und getrocknet. Der Klebstoff wird aus 42 Gew.-% SIS-Elastomer, 20 Gew.-% Pentaerythritester des hydrierten Kolophoniums, 37 Gew.-% eines C₅-Kohlenwasserstoffharzes mit einem R&B-Wert von 85 °C und 1 Gew.-% Antioxidants Irganox® 1010 in der Schmelze gemischt und bei 150 °C mit einer Düse auf die Folienunterseite aufgetragen. Anschließend wird das Klebeband zur Mutterrolle gewickelt und zur weiteren Prüfung in 15 mm Breite geschnitten.

Klebtechnische Daten:
- Klebkraft auf Stahl 2,4, N/cm
- Abrollkraft bei 0,3 m/min 1,0 N/cm
- Masseauftrag 24 g/m².

### Beispiel 2

Die Folie wird auf einer Coextrusionsanlage mit Flachdüse mit flexibler Düsenlippe in drei Schichten in ABA-Aufbau hergestellt, gefolgt von Chillrollstation und einer einstufigen Kurzspaltreckanlage. Beide Außenschichten bestehen aus Bormod HD 905 CF. Die Mittelschicht besteht aus Bormod HD 905 CF, Hostaform C9021 natur und EVAL G156B, gemischt im Verhältnis 44:5:1. Die Düsentemperatur beträgt 230 °C. Die Chillroll-Temperatur und die Reckwalzen-Temperaturen werden so eingestellt, dass die Kristallinität der Folie vor und nach dem Reckvorgang so hoch wie möglich wird. Das Reckverhältnis beträgt 1:8.

**Folieneigenschaften:**

| | |
|---|---|
| Trägerdicke nach Reckung/ µm | 60 |
| Spannung bei 10 %-Dehnung/ MPa | 264 |
| Zugfestigkeit/ MPa | 297 |
| Weiterreißwiderstand/ N/mm | 1600 |
| Bruchdehnung/ % | 12,7 |
| Schlagzugzähigkeit quer/ mJ/mm² | 150 |

Die Folie wird beidseitig coronavorbehandelt, auf der Oberseite mit einem lösungsmittelfreien Silikon beschichtet, welches anschließend mit UV-Strahlen vernetzt wird. Die Unterseite wird mit einem Primer aus Naturkautschuk, Cyclokautschuk und 4,4'-Diisocyanato-diphenylmethan versehen. Der Klebstoff wird aus 40 Gew.-% Naturkautschuk SMRL (Mooney 70), 10 Gew.-% Titandioxid, 37 Gew.-% eines C₅-Kohlenwasserstoffharzes mit einem R&B-Wert von 95 °C und 1 Gew.-% Antioxidants Vulkanox® BKF in einem Kneter in Hexan gelöst. Die 20 Gew.-%ige Klebemasse wird mit einem Streichbalken die geprimerte Folienunterseite aufgetragen und bei 115°C getrocknet. Anschließend wird das Klebeband zur Mutterrolle gewickelt und zur weiteren Prüfung in 15 mm Breite geschnitten.

Klebtechnische Daten:
- Klebkraft auf Stahl 1,8 N/cm
- Abrollkraft bei 0,3 m/min 0,3 N/cm
- Masseauftrag 23 g/m².

### Vergleichsbeispiel 1

Eine Folie und ein Klebeband werden analog Beispiel 1 aus Dow 7C06 mit einem Reckverhältnis von 1:6,1 hergestellt.

**Folieneigenschaften:**

| | |
|---|---|
| Trägerdicke nach Reckung/ µm | 80 |
| Spannung bei 1 %-Dehnung/ MPa | 16 |
| Spannung bei 10 %-Dehnung/ MPa | 142 |
| Zugfestigkeit/ MPa | 247 |
| Bruchdehnung/ % | 32 |
| Weiterreißwiderstand N/mm | 240 |
| Schlagzugzähigkeit quer/ mJ/mm² | 258 |

### Vergleichsbeispiel 2

Dow 7C06 und Styron 457 werden im Verhältnis 4:1 gemischt und daraus eine Folie und ein Klebeband analog Beispiel 1 mit einem Reckverhältnis von 1:8 hergestellt.

**Folieneigenschaften:**

| | |
|---|---|
| Trägerdicke nach Reckung/ µm | 70 |
| Spannung bei 1 %-Dehnung/ MPa | 12 |
| Spannung bei 10 %-Dehnung/ MPa | 222 |
| Zugfestigkeit/ MPa | 260 |
| Bruchdehnung/ % | 39 |
| Weiterreißwiderstand N/mm | 217 |
| Schlagzugzähigkeit quer/ mJ/mm² | 312 |

### Vergleichsbeispiel 3

Dow 7C06 und Dowlex 2032 werden im Verhältnis 41:9 gemischt und daraus eine Folie und ein Klebeband analog Beispiel 1 mit einem Reckverhältnis von 1:6,4 hergestellt.

**Folieneigenschaften:**

| | |
|---|---|
| Trägerdicke nach Reckung/ µm | 120 |
| Spannung bei 1 %-Dehnung/ MPa | 30,3 |
| Spannung bei 10 %-Dehnung/ MPa | 174 |
| Zugfestigkeit/ MPa | 335 |
| Bruchdehnung/ % | 33,4 |
| Weiterreißwiderstand N/mm | 284 |
| Schlagzugzähigkeit quer/ mJ/mm² | 240 |

Überaschenderweise reißt die Folie, wie sie oben ausführlich beschrieben ist, nicht nur quer zur Verstreckungsrichtung nicht weiter, sondern unterstützt das Weiterreißen der Folie in Längsrichtung zuverlässig. Das heißt, dass in der oben beschriebenen Anwendung kein Verjüngen in y- (in Querrichtung des Streifens) oder aber auch in z-Richtung (Richtung, die die Richtung des Trägers definiert) stattfindet. Dadurch wird das Weiterreißen nur in x-Richtung (Längs- oder Maschinenrichtung) möglich. Des Weiteren ist das kontinuierliche Weiterreißen in x-Richtung leicht zusätzlich zum Durchreißen der Wellpappe händisch zu erledigen.
Dies ermöglicht nun die Verbindung von einem Verstärkungsklebeband auf Basis der mit (Haft)kleber beschichteten Folie mit einem Aufreißstreifen in einem einzigen Klebeband.

Gemäß einer bevorzugten Ausführungsform der Erfindung ist der Streifen unter- und/oder oberhalb von Eingriffslöchern, die sich im Karton befinden, aufgebracht.

Weiter vorzugsweise ist zumindest ein Streifen in Form einer in sich geschlossenen Linie auf der Innenseite des Korpus des Kartons aufgebracht. In einer Variante sind es mehrere Streifen in unterschiedlichen Höhen des Korpus.
Bevorzugt liegt die vom Streifen gebildete Linie in einer Ebene, die parallel zum Boden des aufrecht hingestellten Korpus ausgerichtet ist.
Die Linie kann auch eine Ecke des Korpus derart umgeben, dass nach dem Aufreißen des Streifens ein tetraederförmiges Teil vom restlichen Korpus abgetrennt wird.

In einer Variante der Erfindung bildet der Streifen nicht eine in sich geschlossene Linie, sondern spart eine Seitenwand des Kartons aus. Wird der Aufreißstreifen dann entfernt, bleibt die letzte Wand unzerstört und kann so eine Scharnierfunktion übernehmen, insbesondere wenn in der Fortsetzung der Line des Streifens die Wand eine Falzung aufweist. Es bildet sich so ein Deckel, der über das Scharnier auf- und zugeklappt werden kann.

Vorzugsweise ist der Streifen rechtwinklig zur Welle des Kartons aufgebracht.

Gemäß einer vorteilhaften Ausführungsform der Erfindung ist die Anstanzung derart ausgeführt, dass neben dem Verstärkungsstreifen auch der darunter befindliche Karton vollständig durchtrennt ist.

Durch die Anstanzung wird auch die spätere Breite des Aufreißstreifens festgelegt. Zum Aufreißen einer mit dem erfindungsgemäßen Klebeband ausgerüsteten Verpackung kann der gesamte Verstärkungsstreifen benutzt werden, insbesondere wenn dieser nicht zu breit ist. Bevorzugt wird nur ein Teilbereich des Verstärkungsstreifens als Aufreißstreifen gewählt.
Die Breite des Verstärkungsstreifens liegt vorzugsweise zwischen 10 und 25 mm, besonders bevorzugt zwischen 12 und 19 mm. Der Aufreißstreifen hat gemäß einer bevorzugten Ausführungsform der Erfindung eine Breite von 2 bis 10 mm, besonders bevorzugt zwischen 3 und 6 mm.
Die Anstanzung kann in Form zweier V-förmig angeordneter Schenkel, die sich im potentiellen Schnittpunkt nicht berühren, ausgeführt sein.
Weiter vorzugsweise verbindet eine Stanzlinie die beiden anderen Enden der Schenkel, so dass sich die Form eines Dreiecks ergibt, bei dem die Spitze fehlt. Dieses Dreieck bildet den Anfasser am Aufreißstreifen.

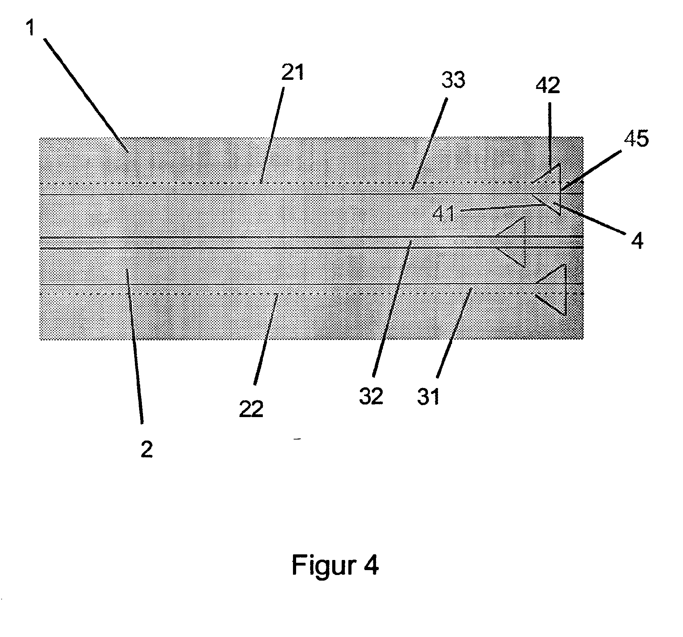

Um einen geeigneten Anfasser zu erzeugen, muss der Verstärkungsstreifen in Querrichtung, also gegen die Reckung in irgendeiner Form durchtrennt werden. Zur Festlegung der Breite des Aufreißstreifens - wenn der Aufreißstreifen mittig im Verstärkungsstreifen angeordnet sein soll -, müssen zwei Einschnitte in Längsrichtung den Verstärkungsstreifen durchtrennen. Beispielsweise könnte der Verstärkungsstreifen an zwei Punkten durchstochen werden, deren Verbindungslinie in den Streifen eingeschnitten wird (vorzugsweise ist diese Verbindungslinie rechtwinklig zur Längskante ausgerichtet). Soll der Aufreißstreifen im Randbereich des Verstärkungsstreifens gebildet werden, reicht ein einziger Einschnitt (siehe zum Beispiel Figur 4).

Auf diese Weise ergibt sich die bevorzugte Ausführungsform der Erfindung, nämlich dass der sich aus dem Verstärkungsstreifen ergebende Aufreißstreifen eine geringere Breite aufweist als der Verstärkungsstreifen.

Der Anfasser muss nicht zwingend in den Karton gestanzt werden. Es ist auch möglich, den Anfasser unter Verwendung eines Messers zu erzeugen, indem der Verstärkungsstreifen in Querrichtung zumindest zum Teil durchtrennt wird und an der Trennlinie zwei im Wesentlichen in Maschinenrichtung weisende Kerben in den Verstärkungsstreifen eingebracht werden, wobei der Abstand der Kerben die Breite des Aufreißstreifens festlegt. Die Kerben und der Einschnitt legen einen Anfasserbereich fest, der den Beginn des Aufreißstreifens bildet.

Beispielsweise wird das beschriebene Klebeband zum Beispiel während der Wellpappenproduktion auf der Wellpappenanlage auf das innere Deckpapier der Wellpappe verklebt. In weiteren Schritten wird der nach der Wellpappanlage entstandene Bogen weiter zu einer Box, wie sie zum Beispiel für Getränkeflaschen benutzt wird, mit in den Stirnseiten eingestanzten Handgriffen konfektioniert. Das Klebeband wird dabei direkt über den Grifflöchern verklebt. Auf einer der beiden Seitenwände ist eine Anstanzung in den Streifen des Klebebands eingebracht, die es ermöglicht, zum späteren Öffnen der Verpackung einen Anfasser aus dem Klebeband herauszulösen. An diesem Anfasser wird gezogen und der sich aus dem Klebebandstreffen bildende Anfasserstreifen trennt während des Öffnungsvorgangs die direkt über ihm befindliche Papplage aus der Box.

Das Tragen der Getränkebox wird also durch das Klebeband hinreichend unterstützt. Nachdem der Endkunde die Verpackung bis zum Beispiel nach Hause getragen hat, kann der Endverbraucher die Verpackung durch das Nutzen der Anstanzung mit dem in dem Verstärkungsklebeband inkorporierten Aufreißstreifen zuverlässig öffnen.

Im Falle, dass ein Karton gegen Ausbeulen durch mehrere Klebebandstreifen, die in unterschiedlich hohen, parallel zum Boden ausgerichteten Ebenen angeordnet sind, verstärkt ist, ist die erste Wirkung der Klebebandstreifen der Verstärkungseffekt während des Transportes. Danach kann die Verpackung mit dem obersten der Verstärkungsstreifen geöffnet werden. Sind auch bei den darunter befindlichen Verstärkungsstreifen Stanzungen angebracht, so kann die Größe der Verpackung zum Beispiel bei abnehmendem Füllgrad reduziert werden. Dies reduziert den für die Verpackung benötigten Stauraum.
Des Weiteren kann die verbliebene Kante durch den verbleibenden Rest des Klebebandes gegen Abnutzung geschützt werden.

Weitervorzugsweise lässt sich das Klebeband auf einer Verpackung einsetzen, bei der das äußere Deckpapier der Wellpappe gezielt dort angeritzt ist, wo später der Aufreißstreifen herausgezogen wird. Auf diese Weise entsteht auf der äußeren Seite der Verpackung eine saubere Kante. Durch die vorliegende Erfindung wird zusätzlich auch im Inneren der Box eine saubere Aufreißkante produziert, die den Gesamteindruck für Verkaufsverpackungen erhöht.

Im Folgenden soll die Erfindung anhand mehrerer Figuren näher erläutert werden, ohne damit die Erfindung unnötig einschränken zu wollen.

Es zeigen
- Figur 3: einen Ausschnitt aus einer Verpackung, bei der auf einer Seitenwand ein Verstärkungsstreifen aufgebracht ist und
- Figur 4: einen Ausschnitt aus einer Verpackung, bei der auf einer Seitenwand ein Verstärkungsstreifen aufgebracht ist, wobei in dem Verstärkungsstreifen mehrere Aufreißstreifen angedeutet sind.

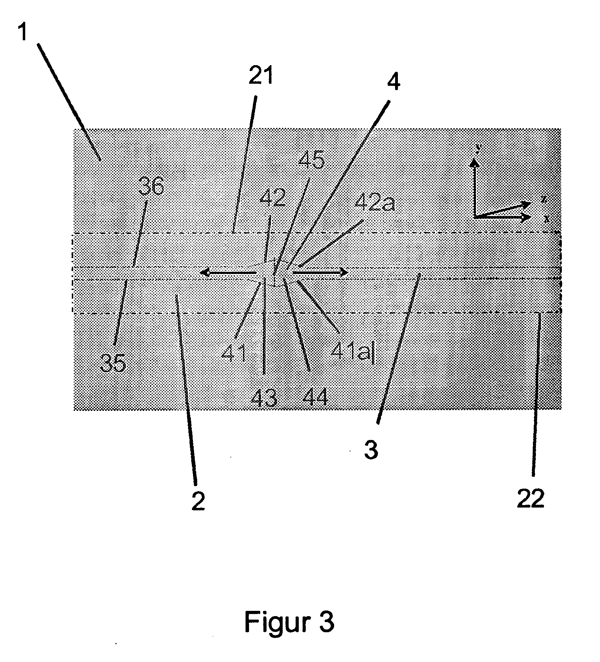

In der Figur 3 ist ein Ausschnitt aus einer Verpackung, bei der auf einer Seitenwand 1 ein Verstärkungsstreifen 2. Der Verstärkungsstreifen 2 wird durch die Ränder 21 und 22 in seiner Breite begrenzt und erstreckt sich über die gesamte Seitenwand 1.
In dem Verstärkungsstreifen 2 ist eine Anstanzung 4 vorhanden, die zwei Anfasser 43, 44 erzeugt. Die Anstanzung 4 besteht aus zwei Paaren zweier V-förmig angeordneter Schenkel 41, 42, 41a, 42a, wobei sich bei beiden Schenkel eines jeden Paares im potentiellen Schnittpunkt nicht schneiden. Die Schenkel sind dabei durch die Seitenwand 1 und durch den Verstärkungsstreifen 2 durchgestanzt. Bevorzugt ist die Verbindungslinie 45, die die Endpunkte der Schenkel miteinander verbindet ebenfalls durchgestanzt.
Zum Öffnen der Packung wird ein er der beiden Anfasser 43, 44, beispielsweise der Anfasser 43 gegriffen und hochgeklappt. Die durchgestanzten Schenkel 41, 42 erzeugen einen Aufreißstreifen 3, dessen Breite dem Abstand der Enden aufeinander zulaufenden Schenkel entspricht. Die Breite des Anfasserstreifens 3 ist durch die parallelen Linien 35, 36 angedeutet. Beim Ziehen am Anfasser 43 in Richtung des dargestellten Pfeils trennt sich der Verstärkungsstreifen 2 entlang der Linien 35, 36 auf. Dieser entstehende Streifen bildet den Anfasserstreifen 3.
Aufgrund der hervorragenden Eigenschaften der beschriebenen Folie verjüngt sich der Anfasserstreifen 3 während des Öffnens auch nicht, so dass der Anfasserstreifen den gesamten Karton durchtrennt.
Durch Ziehen am anderen Anfasser 44, ebenfalls in die durch den Pfeil angedeutete Richtung, entsteht ein zweiter Anfasserstreifen 3.

Figur 4 zeigt einen Ausschnitt aus einer Verpackung, bei der auf einer Seitenwand 1 ein Verstärkungsstreifen 2 aufgebracht ist, wobei in dem Verstärkungsstreifen 2 mehrere Aufreißstreifen 31, 32, 33 angedeutet sind.
Die in der Figur 3 beschriebene Anstanzung 4 muss dabei nicht immer in der Mitte des Verstärkungsstreifens 2 liegen.
Die Position der Anstanzung 4 ist variabel. Sie kann in der Mitte (Aufreißstreifen 32) oder aber auch im Randbereich (Aufreißstreifen 31, 33) liegen, solange ein Schenkel 41 der V-förmigen Anstanzung dabei noch komplett im Verstärkungsstreifen 2 liegt und durch ein für die Verpackung ausreichend breiter Aufreißstreifen 3 herausgelöst wird.

## Patentansprüche

1. Karton, ausgerüstet mit zumindest einem Streifen eines Klebebands zur Verstärkung insbesondere im Bereich von Stanzungen, der gleichzeitig als Aufreißstreifen dient, wobei in dem Streifen zumindest eine Anstanzung vorgesehen ist, die als Anfasser für den Streifen beim Aufreißen des Kartons dient, und wobei als Trägermaterial für das Klebeband eine monoaxial in Längsrichtung des Streifens verstreckte Polyolefinfolie verwendet wird, wobei die Folie eine Mischung aus einem olefinischen und einem polaren nichtolefinischen Polymer enthält.

2. Karton nach Anspruch 1,
**dadurch gekennzeichnet, dass**
der Anteil an polarem nichtolefinischem Polymer in der Mischung der Folie des Klebebands im Bereich von 5 bis 30 Gew.-% liegt.

3. Karton nach Anspruch 1 oder 2,
**dadurch gekennzeichnet, dass**
die Folie des Klebebands aus einer Matrix aus olefinischem Polymer besteht, worin Fasern aus dem polaren nichtolefinischen Polymer eingebettet sind, welche vorzugsweise einen Durchmesser von 0,01 bis 50, besonders bevorzugt 0,1 bis 20 µm aufweisen.

4. Karton nach zumindest einem der Ansprüche 1 bis 3,
**dadurch gekennzeichnet, dass**
die Folie des Klebebands
• eine Dicke von 15 bis 200 µm, vorzugsweise 30 bis 140 µm, besonders vorzugsweise 50 bis 90 µm aufweist,
• in Längsrichtung ein Reckverhältnis von mindestens 1:4,5, vorzugsweise mindestens 1:7,
• in Längsrichtung eine Zugfestigkeit von mindestens 200 N/mm², vorzugsweise mindestens 300 N/mm², weiter vorzugsweise mindestens 400 N/mm²,
• in Längsrichtung eine Spannung bei 10 %-Dehnung von mindestens 150 N/mm², vorzugsweise mindestens 250 N/mm² und/oder
• in Querrichtung einen Weiterreißwiderstand von mindestens 400 N/mm, vorzugsweise mindestens 800 N/mm, weiter vorzugsweise mindestens 1500 N/mm aufweist.

5. Karton nach zumindest einem der vorherigen Ansprüche,
**dadurch gekennzeichnet, dass**
das olefinische Polymer zu mindestens 50 Gew.-% Propylen enthält.

6. Karton nach zumindest einem der vorherigen Ansprüche,
**dadurch gekennzeichnet, dass**
das polare nichtolefinische Polymer gewählt ist aus der Gruppe der Polyester, der Polyamide, des Polyoxymethylens, der Polyarylensulfide, der Polyarylenoxide und der Polyurethane, bevorzugt Polybutylenterephthalat, wobei das nichtolefinische Polymer bevorzugt teilkristallin ist.

7. Karton nach zumindest einem der vorherigen Ansprüche,
**dadurch gekennzeichnet, dass**
die Mischung als dritte Komponente ein polar modifiziertes Polyolefin vorzugsweise aus der Gruppe der Copolymere von Olefinen mit Vinylestern, Methacrylsäure und Acrylsäure, besonders bevorzugt Ethylen-Vinylacetat- und Ethylen-(Meth)acrylatCopolymere sowie deren Ester oder aus der Gruppe der Pfropfpolymere mit einer ungesättigten organischen Säure, besonders bevorzugt ein maleinsäureanhydrid-, methacrylsäure- oder acrylsäuregepropftes Polyolefin enthält, wobei der Anteil an polar modifiziertem Polyolefin in dieser Mischung vorzugsweise im Bereich von 0,2 bis 10 Gew.-% liegt.

8. Karton nach zumindest einem der vorherigen Ansprüche,
**dadurch gekennzeichnet, dass**
der Streifen unter- und/oder oberhalb von Eingriffslöchern, die sich im Karton befinden, aufgebracht ist.

9. Karton nach zumindest einem der vorherigen Ansprüche,
**dadurch gekennzeichnet, dass**
zumindest ein Streifen in Form einer in sich geschlossenen Linie auf der Innenseite des Korpus des Kartons aufgebracht ist oder mehrere Streifen in unterschiedlichen Höhen des Korpus.

10. Karton nach zumindest einem der vorherigen Ansprüche,
**dadurch gekennzeichnet, dass**
der Streifen rechtwinklig zur Welle des Kartons aufgebracht ist.

11. Karton nach zumindest einem der vorherigen Ansprüche,
**dadurch gekennzeichnet, dass**
die Anstanzung derart ausgeführt ist, dass neben dem Verstärkungsstreifen auch der darunter befindliche Karton vollständig durchtrennt ist.

12. Karton nach zumindest einem der vorherigen Ansprüche,
**dadurch gekennzeichnet, dass**
die Anstanzung in Form zweier V-förmig angeordneter Schenkel, die sich im potentiellen Schnittpunkt nicht berühren, ausgeführt ist.

13. Karton nach Anspruch 12,
**dadurch gekennzeichnet, dass**
eine Stanzlinie die beiden anderen Enden der Schenkel verbindet, so dass sich die Form eines Dreiecks ergibt, bei dem die Spitze fehlt.

14. Karton nach zumindest einem der vorherigen Ansprüche,
**dadurch gekennzeichnet, dass**
der sich der aus dem Verstärkungsstreifen ergebende Aufreißstreifen eine geringere Breite aufweist als der Verstärkungsstreifen.

## Claims

1. Carton equipped with at least one strip of an adhesive tape for reinforcing in particular in the region of die-cuts, serving simultaneously as a tear strip, in the strip there being at least one partial cut score which serves as a grip tab for the strip when the carton is torn open, and a polyolefin film oriented monoaxially in the lengthwise direction of the strip being used as carrier material for the adhesive tape, the film comprising a mixture of an olefinic and a polar non-olefinic polymer.

2. Carton according to Claim 1,
**characterized in that**
the fraction of polar non-olefinic polymer in the mixture of the adhesive tape film is in the range from 5% to 30% by weight.

3. Carton according to Claim 1 or 2,
**characterized in that**
the adhesive tape film is composed of a matrix of olefinic polymer in which fibres of the polar non-olefinic polymer are embedded which have a diameter of preferably 0.01 to 50, more preferably 0.1 to 20 µm.

4. Carton according to at least one of Claims 1 to 3,
**characterized in that**
the adhesive tape film has
• a thickness of 15 to 200 µm, preferably 30 to 140 µm, more preferably 50 to 90 µm,
• a machine-direction draw ratio of at least 1:4.5, preferably at least 1:7,
• a machine-direction tensile strength of at least 200 N/mm², preferably at least 300 N/mm², more preferably at least 400 N/mm²,
• a machine-direction stress at 10% strain of at least 150 N/mm², preferably at least 250 N/mm², and/or
• a cross-direction tear propagation resistance of at least 400 N/mm, preferably at least 800 N/mm, more preferably at least 1500 N/mm.

5. Carton according to at least one of the preceding claims,
**characterized in that**
the olefinic polymer contains propylene to an extent of at least 50% by weight.

6. Carton according to at least one of the preceding claims,
**characterized in that**
the polar non-olefinic polymer is selected from the group consisting of polyesters, polyamides, polyoxymethylene, polyarylene sulphides, polyarylene oxides and polyurethanes, preferably polybutylene terephthalate, the non-olefinic polymer preferably being partially crystalline.

7. Carton according to at least one of the preceding claims,
**characterized in that**
the mixture comprises as a third component a polar-modified polyolefin preferably from the group of the copolymers of olefins with vinyl esters, methacrylic acid and acrylic acid, more preferably ethylene-vinyl acetate and ethylene-(meth)acrylate copolymers and also their esters or from the group of graft polymers with an unsaturated organic acid, more preferably a polyolefin grafted with maleic anhydride, methacrylic acid or acrylic acid, the fraction of polar-modified polyolefin in this mixture being preferably in the range from 0.2% to 10% by weight.

8. Carton according to at least one of the preceding claims,
**characterized in that**
the strip is applied below and/or above engagement holes located in the carton.

9. Carton according to at least one of the preceding claims,
**characterized in that**
at least one strip is applied in the form of a self-contained line on the inside of the body of the carton, or two or more strips at different heights on the body.

10. Carton according to at least one of the preceding claims,
**characterized in that**
the strip is applied at right angles to the corrugation of the carton.

11. Carton according to at least one of the preceding claims,
**characterized in that**
the partial cut score is executed such that not only the reinforcing strip but also the underlying carton is completely severed.

12. Carton according to at least one of the preceding claims,
**characterized in that**
the partial cut score is executed in the form of two limbs in a V-shape arrangement which do not contact one another at the potential intersection point.

13. Carton according to Claim 12,
**characterized in that**
a punch line joins the two other ends of the limbs, producing the form of a triangle with the top missing.

14. Carton according to at least one of the preceding claims,
**characterized in that**
the tear strip resulting from the reinforcing strip is flower in width than the reinforcing strip.

## Revendications

1. Carton pourvu d'au moins une bandelette d'une bande adhésive pour le renforcement, en particulier dans le domaine des découpages, qui sert simultanément de bandelette d'arrachage, au moins une perforation étant prévue dans la bandelette, qui sert de prise pour la bandelette lors de l'ouverture par arrachage du carton, et utilisant comme matériau support pour la bande adhésive une feuille en polyoléfine étirée monoaxialement dans le sens longitudinal de la bandelette, la feuille contenant un mélange d'un polymère oléfinique et d'un polymère polaire non oléfinique.

2. Carton selon la revendication 1, **caractérisé en ce que** la proportion de polymère polaire non oléfinique dans le mélange de la feuille de la bande adhésive se situe dans la plage de 5 à 30% en poids.

3. Carton selon la revendication 1 ou 2, **caractérisé en ce que** la feuille de la bande adhésive est constituée par une matrice en polymère oléfinique, dans laquelle sont enrobées des fibres en polymère polaire non oléfinique, qui présentent de préférence un diamètre de 0,01 à 50, de manière particulièrement préférée de 0,1 à 20 µm.

4. Carton selon au moins l'une quelconque des revendications 1 à 3, **caractérisé en ce que** la feuille de la bande adhésive
- présente une épaisseur de 15 à 200 µm, de préférence de 30 à 140 µm, en particulier de préférence de 50 à 90 µm,
- présente, dans le sens longitudinal, un rapport d'étirement d'au moins 1:4,5, de préférence d'au moins 1:7,
- présente, dans le sens longitudinal, une résistance à la traction d'au moins 200 N/mm², de préférence d'au moins 300 N/mm², plus préférablement d'au moins 400 N/mm²
- présente, dans le sens longitudinal, une tension à un allongement de 10% d'au moins 150 N/mm², de préférence d'au moins 250 N/mm² et/ou
- présente, dans le sens transversal, une résistance à la propagation de la rupture d'au moins 400 N/mm², de préférence d'au moins 800 N/mm², plus préférablement d'au moins 1500 N/mm²

5. Carton selon au moins l'une quelconque des revendications précédentes, **caractérisé en ce que** le polymère oléfinique contient au moins 50% en poids de propylène.

6. Carton selon au moins l'une quelconque des revendications précédentes, **caractérisé en ce que** le polymère polaire non oléfinique est choisi dans le groupe formé par les polyesters, les polyamides, le polyoxyméthylène, les poly(sulfures d'arylène), les poly(oxydes d'arylène) et les polyuréthanes, de préférence le poly(téréphtalate de butylène), le polymère non oléfinique étant de préférence partiellement cristallin.

7. Carton selon au moins l'une quelconque des revendications précédentes, **caractérisé en ce que** le mélange contient, comme troisième composant, une polyoléfine modifiée de manière polaire, de préférence du groupe formé par les copolymères d'oléfines avec des esters de vinyle, l'acide méthacrylique et l'acide acrylique, de manière particulièrement préférée les copolymères d'éthylène-acétate de vinyle et d'éthylène-(méth)acrylate ainsi que leurs esters ou du groupe formé par les polymères greffés avec un acide organique insaturé, de manière particulièrement préférée une polyoléfine greffée par un anhydride de l'acide maléique, l'acide méthacrylique ou l'acide acrylique, la proportion de polyoléfine modifiée de manière polaire étant dans ce mélange de préférence située dans la plage de 0,2 à 10% en poids.

8. Carton selon au moins l'une quelconque des revendications précédentes, **caractérisé en ce que** la bande est placée sous et/ou au-dessus de trous de prise se trouvant dans le carton.

9. Carton selon au moins l'une quelconque des revendications précédentes, **caractérisé en ce qu'**au moins une bandelette est appliquée sous forme d'une ligne fermée en soi sur la face interne du corps du carton ou plusieurs bandelettes sont appliquées à des hauteurs différentes du corps.

10. Carton selon au moins l'une quelconque des revendications précédentes, **caractérisé en ce que** la bandelette est appliquée perpendiculairement à l'ondulation du carton.

11. Carton selon au moins l'une quelconque des revendications précédentes, **caractérisé en ce que** la découpe est réalisée de manière telle qu'outre la bandelette de renforcement, le carton sous-jacent est également complètement séparé.

12. Carton selon au moins l'une quelconque des revendications précédentes, **caractérisé en ce que** la perforation est réalisée sous forme de deux branches disposées en forme de V, qui ne se touchent pas au niveau du point de coupe potentiel.

13. Carton selon la revendication 12, **caractérisé en ce qu'**une ligne de coupe relie les deux autres extrémités des branches de manière à obtenir la forme d'un triangle dont le sommet manque.

14. Carton selon au moins l'une quelconque des revendications précédentes, **caractérisé en ce que** la bandelette d'arrachage obtenue à partir de la bandelette de renforcement présente une largeur inférieure à celle de la bandelette de renforcement.
